# EUROPEAN PATENT APPLICATION

(11) **EP 3 747 258 A1**
(43) Date of publication of application: **09.12.2020**
(21) Application number: 19177866.1
(22) Date of filing: 03.06.2019
(51) Int. Cl.: A01G 9/02

(54) **AGRICULTURAL PREFABRICATED WALL PANEL, AN AGRICULTURAL WALL PANEL SYSTEM AND A METHOD FOR ERECTING AN AGRICULTURAL WALL PANEL SYSTEM**

(71) Applicant: Byggros A/S, 5260 Odense S (DK)
(72) Inventor: STORM, Søren, 5260 Odense S (DK); KRESTEN KJELD, Anders, 5260 Odense S (DK)
(74) Representative: Budde Schou A/S

(57) **Abstract**

The invention relates to an agricultural prefabricated wall panel, an agricultural wall panel system and a method for erecting an agricultural wall panel system, where the wall panel comprises a laminated structure having a main layer and first and second layers of a soil substrate. The main layer comprises a larger grain size compared to the covering layers and a larger content of "mesapores". The wall panel further comprises a supporting structure enveloping the layers of soil substrate and preferably being integrated into the covering layers. The wall panel comprises a number of openings through one of the covering layers such that a number of plants may be inserted into the opening and into the main layer.

## Description

### TECHNICAL FIELD

The present invention relates to an agricultural prefabricated wall panel, an agricultural wall panel system and a method for erecting an agricultural wall panel system.

### BACKGROUND OF THE INVENTION

It is known to arrange building and construction surfaces as plant bearing surfaces, for example arranging a vertical building wall or a traffic sound barrier covered with plants. These building and construction surfaces are typically arranged with a plurality of modular units for carrying soil for the cultivation of plants.

The modular units defines a plurality of baskets/crates which are mounted to the receiving wall via a supporting structure, which covers the total area of the plant bearing surface, such that a number, and typically a large number of baskets/crates are hung on the supporting structure. After installation, the crates/baskets need to be filled with soil and plant seeds or already grown plants.

Such prior art systems are disclosed in e.g. WO2013071496A1, WO2016062858A1, US2012186148A1, JP2003325052. Each of these prior art documents discloses green walls which are erected from a number of modular baskets/crates arranged on a supporting construction on a building surface. In order to water the plants, the modular baskets/crates typically comprises a watering system, composed of a piping system which is integrated throughout the whole green wall.

However, the process of erecting the above mentioned plant bearing surfaces, is extremely time consuming and expensive in work labor. The baskets/crates are prefabricated, but the entire supporting system needs to be constructed on site. Afterwards, the baskets/crates are mounted onto the supporting structure individually. The watering system needs to be installed after installing the baskets/crated, and as a final step each basket/crate is filled with soil and plant seeds.

Further, the baskets/crates come- to the building site with specific standard dimensions, and often there is a problem of adapting the plurality of baskets/crates to the specific dimensions of the intended area of the plant surface, as the area of the building wall may not correspond to the area of the plurality of baskets.

The known green walls have no overall structural strength and a large amount of materials need to be used. The support system is typically constructed from a large number of metal rails and the baskets/crates are typically constructed from plastic or thin walled metal plates.

It is an object of the present invention to provide a prefabricated agricultural wall panel, which is easy and cost effective to install, easy to adapt to a specific building surface, and does not use a large amount of metal and plastic in order to have the necessary stability.

The invention further has the advantage of acting as an insulator of the building construction. Due to solar energy absorption of the plants, the building is kept insulated when hot, and due to plant evaporation, the surface of the building is kept at a moderate temperature which has a cooling effect on the building construction.

The above object and advantages, together with numerous other objects and advantages, which will be evident from the description of the present invention, are according to a first aspect of the present invention obtained by:
An agricultural prefabricated wall panel for mounting as a surface cladding and plant-bearing surface onto a building wall, the wall panel comprises a first main surface for facing the building wall, and a second main surface, opposite the first main surface, and for facing an exterior of the building wall and defining an outside cladding surface, the wall panel further comprises an upper surface, a bottom surface and a first and second side surfaces defining vertical side surfaces when mounted onto the building wall,
the wall panel being constructed as a self-supporting laminate wall panel having a main layer and first and second covering layers, the main layer defines a middle layer of the wall panel, the first covering layer covers the main layer on the side facing the building wall and the second covering layer covers the main layer on the side facing the exterior,
the main layer comprises a plant cultivation substrate, such as a soil substrate, suitable for plant cultivation and having a pore space above 45 %, and preferably above 53 %,
the main layer comprising a first cultivation substrate, having a larger grain size than the first and second covering layers,
the wall panel further comprises a first supporting structure enveloping the first and second main surfaces.

The agricultural wall panel is in a basic embodiment defined as a self-supporting laminate wall panel enveloped by a first supporting structure where the middle layer is made from a plant growth substrate. The two covering layers do not necessarily comprise a plant growth substrate but may in an alternative embodiment do so. The two covering layers may thus comprise any type of plaster known to the skilled person suitable for covering the middle layer.

The laminate comprises a major middle layer and a thinner covering layer arranged on each side of the major middle layer. The middle layer comprises a soil material having a high content of pore space, which is above 45 % and preferably above 53 %, and mixed with a binder, preferably an organic binder in order to establish a solid structure. One example of soil substrate may be an expanded clay material, mo-clay or pumice, or like materials having a high content of pore space and a pH-value preferably between 5-7.

The middle layer and the two covering layers may comprise the same type of binder. However, the layers may comprise different types of binders such as e.g. clay, gypsum or lime etc. which comes in variations with distinct properties.

The different binders generate the individual layers with specific properties in relation to vapors permeability, weather resistance, strength and embodied energy, which properties are known to the skilled person.

The middle layer, which is the primary plant growth layer, is arranged with a larger grain size. Hereby is achieved that the middle layer has a large content of pore space suitable to store a large amount of water compared to the two covering layers.

The two covering layers are arranged with a smaller grainsize, which arranges the two covering layers more compact and stable, hereby ensuring an overall stabile laminate. The dimensions of the wall panel and thickness of each layer of the laminate, may vary according to the need. The skilled person would easily recognize what dimensions are suitable for the intended building wall, and what thickness of the layers is suitable for the intended types plants. Each wall panel may thus have a width and height varying from a few centimeters to several meters, and the thickness of the layers may vary from below 1 cm to several centimeters, such as above 10 cm.

In order to install a vegetation into the wall panel, a number of openings are arranged into the second covering layer and the first supporting structure, such that plants can be inserted directly into the middle layer. The openings may be premanufactured or drilled onsite with e.g. a cup drill. It is thus possible to arrange any number and pattern of openings such that the plants may be arranged according to need.

The prefabricated wall panel, is in the preferred embodiment, arranged on a building wall. However, as the prefabricated wall panel is self-supporting, it may in another preferred embodiment be arranged as a freestanding agricultural wall.

According to a further embodiment of the first aspect of the invention, the main layer comprises a larger content of "mesopores", having a size of 30 µm-75 µm, compared to the first and second covering layers.

The main layer comprises a large amount of mesopores, also defined as water storage pores because of the ability to store water useful to plants. Mesopores do not have capillary forces too great so that the water does not become limiting to the plants and has a size of 30 µm-75 µm.

Experiments by the applicant has shown, that such wall panels have a tremendous capability of carrying an even distribution of water over a large vertical span, such as up to 5 meters or more. Hereby is achieved, that a building surface having a large agricultural surface may be supplied with water from above, whereby the need for interior watering systems, such as an interior piping system is avoided.

According to a further embodiment of the first aspect of the invention, the first supporting structure consists of a mesh structure, which is incorporated into the first and second covering layers and at least partly integrated, preferably fully integrated therein. Preferably, the first supporting structure is made from a stainless steel mesh such as a galvanized steel mesh. As an alternative to steel, a plastic structure may be used. The mesh structure has the function of adding sufficient mechanical strength to the wall panel, and may in a basic embodiment be wrapped around the first and second main surfaces and the bottom surface of the wall panel. In a further basic embodiment the mesh structure also covers the upper surface of the wall panel. In both basic embodiments, the mesh structure is applied to the outside surface of the two covering layers hereby defining the outside surface of the wall panel. However, in a preferred embodiment, the mesh structure is partly integrated or most preferably fully integrated into the covering layers, hereby arranging a wall panel having a homogeneous surface.

The entire wall panel is thus suitable to be mounted onto the intended building wall by fastening means such as screws or other suitable fastening means, which are simply driven through the wall panel and into the building wall. There is no need for any supporting construction between the wall panel and the building wall.

According to a further embodiment of the first aspect of the invention, the first covering layer and/or the second covering layer is vapor diffusion open.

In order to avoid anaerobic conditions inside the wall panel, one or both of the covering layers are arranged diffusion open. Hereby the plants will have sufficient free oxygen.

According to a further embodiment of the first aspect of the invention, the wall panel comprises a profiled back panel at the first main surface. The profiled back panel being a vapor barrier and arranged, by the profiles, to establish a ventilated space between the wall panel and the building wall.

The main surface of the wall panel which faces the building wall, preferably comprises a profiled back panel, which is preferably made from plastic. The profiled panel comprises a corrugated surface, such that when the wall panel is mounted onto the building wall, the corrugated patterns establishes a ventilated space between the wall panel and the building wall, and further acts as a vapor barrier towards the building. According to a further embodiment of the first aspect of the invention, the main layer comprises an incorporated second supporting structure extending in a direction substantially parallel to the first and second main surfaces.

In order to arrange the wall panel with an increased mechanical strength, which is especially advantageous when the panel is fabricated in a larger size, a reinforcing steel mesh is incorporated into the middle layer. The reinforcing steel mesh is preferable stainless steel and may be incorporated in various thicknesses, preferably 4-6 mm, into the middle layer according to the needed mechanical strength of the wall panel. The incorporated second supporting structure may in an alternative be made from fiber material such as glass or carbon fiber.

According to a further embodiment of the first aspect of the invention, the upper surface, the lower surface and the first and second side surfaces comprise a profiled surface suitable for mating a corresponding neighboring wall panel.

In order to arrange several wall panels in connection in a secure manner, the side surfaces of the wall panel are formed with a profiled surface, such that two abutting wall panels are mutually connected. A further advantage is, that the middle layer of each wall panel, which constitutes the plant growth layer, is mutually connected creating a continuous plant growth layer throughout several wall panels.

According to a further embodiment of the first aspect of the invention, the wall panel comprises an auxiliary layer arranged between the first covering layer and the profiled back panel where the auxiliary layer comprises a heat insulating material.

The wall panel comprises in a further embodiment, an auxiliary layer formed as an additional panel between the profiled back panel and the first covering layer. This has the technical effect that the wall panel may be arranged as a heat insulation panel on a building façade. The auxiliary layer may be constructed from e.g. pumice, stone wool or glass wool etc. or other materials known to the skilled person, which establishes a heat insulating surface.

According to a further embodiment of the first aspect of the invention, the wall panel comprises an outer panel of weatherproof and/or fire retardant material, and arranged onto the first covering layer, hereby establishing an outer surface of the wall panel. The wall panel may in a preferred embodiment comprise an outer panel of weatherproof and/or fire retardant material, which outer panel is arranged on the second covering layer. The outer panel defines together with the plants the outer appearance of the wall panel. Here, the plants are inserted through openings of the outer panel, where the openings may be premanufactured or formed onsite by a suitable tool such as a cup drill. The outer panel may comprise embossments representing a brick wall pattern, and may come in different colors.

In further embodiments, the prefabricated wall panel may comprise integrated sensors into one or more of the layer, such as sensors for measuring moisture content, temperature, oxygen, and pH.

According to a second aspect of the present invention, the above objects and advantages are obtained by:
An agricultural wall panel system comprising a plurality of wall panels where the wall panels are interconnected, hereby establishing a continuous wall panel surface, such that the main layers of the wall panels are mutually connected for establishing a continuous plant cultivation substrate.

Arranging a plurality of interconnected agricultural prefabricated wall panels in a continuous manner has the advantage that larger surface areas of e.g. a building facade may be established as a green wall. The prefabricated wall panels are easy and cost effective to install as no supporting system is needed, and workers may in a quick manner install the prefabricated wall panels onto the building façade or as a freestanding wall. In order to adapt the prefabricated wall panels to the dimensions of the building wall or a desired length of the freestanding wall, the finishing wall panels may be cut in dimensions with a suitable tool such as a grinder.

According to a third aspect of the present invention, the above objects and advantages are obtained by:
A method for erecting an agricultural wall panel system, the method comprises the steps of:
- providing a plurality of agricultural prefabricated wall panels,
- mounting the agricultural wall panels onto a supporting surface, such as a building wall or a ground surface, hereby establishing a continuous wall panel surface,
- providing a number of holes through the second main surface and through the second covering layer,
- inserting a number of plants through the openings.

Fig. 1 shows a perspective view of an agricultural prefabricated wall panel.
Fig. 1A shows a partial cross section of a bottom part of an agricultural prefabricated wall panel.
Fig. 2 shows perspective view of an agricultural wall panel system.
Fig. 3 shows an exploded view in perspective of an agricultural wall panel.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will thus not be described in detail with respect to the description of each figure.

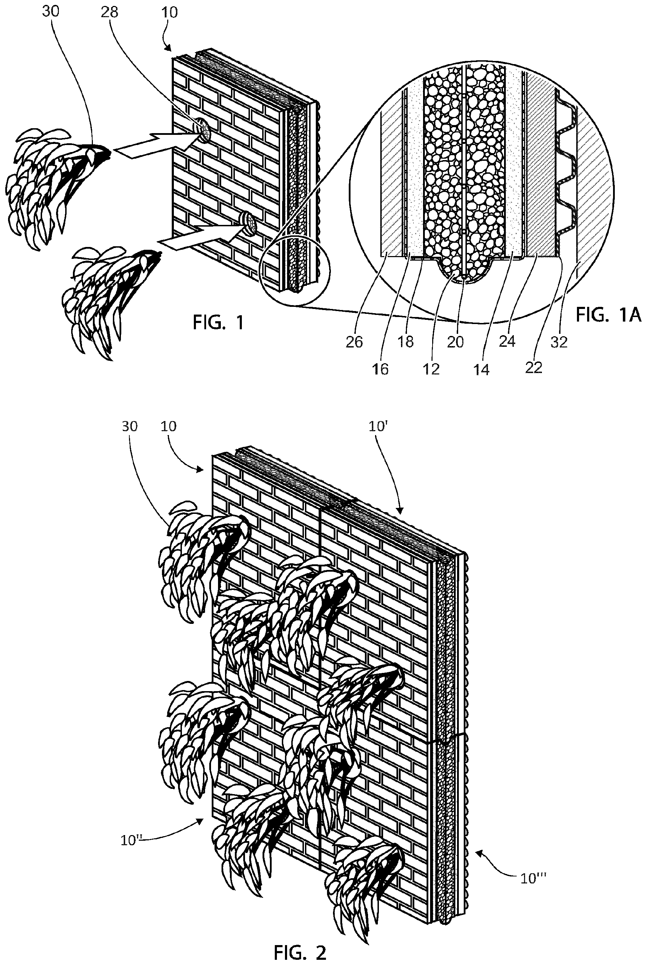

Fig. 1 shows a perspective view of an agricultural prefabricated wall panel 10. The prefabricated wall panel 10 comprises a number of openings 28 in the exterior surface into an interior middle layer of a plant cultivation substrate, such that a plant 30 or a plurality of plants 30 may be inserted into each opening and into the cultivation substrate. Before the plants 30 are inserted into respective openings 28, the prefabricated wall panel may be fastened to a suitable building element such as a building wall 32 (shown in fig. 1A).

Fig. 1A shows a partial cross section of a bottom part of an agricultural prefabricated wall panel. The prefabricated wall panel 10 comprises a main layer 12 constituting a middle layer of the prefabricated wall panel 10, a first covering layer 14 and a second covering layer 16 arranged on either side of the main layer 12. The first covering layer 14 is arranged towards the surface to which the wall panel is to be mounted (illustrated as a building wall 32), and the second covering layer 16 is arranged on the opposite side of the main layer 12. The main layer 12 and the first and second covering layers 14, 16 are enveloped with a first supporting structure 18, which in the illustrated embodiment is integrated into the outer surface of the first covering layer 14 and the second covering layer 16 and preferably composed of a stainless steel mesh. The first supporting structure 18 further extends at the bottom of the wall panel between the first and the second covering layers 14, 16. Both the main layer 12 and the first and second covering layers 14, 16 comprise the plant cultivation substrate, however, it is evident from figure 1A that the main layer comprises a larger grain size compared to the covering layers 14, 16. A second supporting 20 structure, which preferably is a reinforcing steel mesh, is in the illustrated embodiment incorporated into the main layer 12. This feature is particularly relevant when the wall panel is fabricated in larger sizes exceeding a width and height of 1 to several meters.

The wall panel further comprises an auxiliary layer 24, such as a heat insulating layer on the first covering layer 14.

The wall panel in figure 1A further comprises a profiled back panel 22 which is arranged between the auxiliary layer 24 and a building wall 32 to which the wall panel 10 is mounted. The profiled back panel 22 comprises a profiled surface pattern such that a ventilating space is arranged between the wall panel 10 and the building wall 32.

Both the auxiliary layer and the profiled back panel 22 are optional in a basic embodiment. In a situation where the auxiliary layer 24 is not present (not shown), the profiled pack panel 22 is mounted directly to the first covering layer 14.

On the surface of the wall panel opposite the profiled pack panel 22, the wall panel 10 comprises an outer panel 26 which preferably is weatherproof and /or fire retardant and defines the outer face of the wall panel 10. The openings 28 into which the plants 30 are inserted are extending through the outer panel 26 and through the second covering layer 16.

It is apparent from figure 1 and 1A that the upper surface comprises a groove and the bottom surface comprises a protruding element corresponding to the groove such that adjacent wall panels 10', 10", 10"' are interconnected. In all the figures, the grooves and protrusions are only illustrated in relation to the top and bottom surface, however, it is obvious that a groove is arranged in one of the vertical side surfaces and a protrusion is arranged in the other vertical side surface.

Fig. 2 shows perspective view of an agricultural wall panel system. The system is illustrated with four wall panels 10, 10', 10", 10"', each having a number of plants 30, however, it is obvious that the wall panel system may comprise any number of wall panels 10.

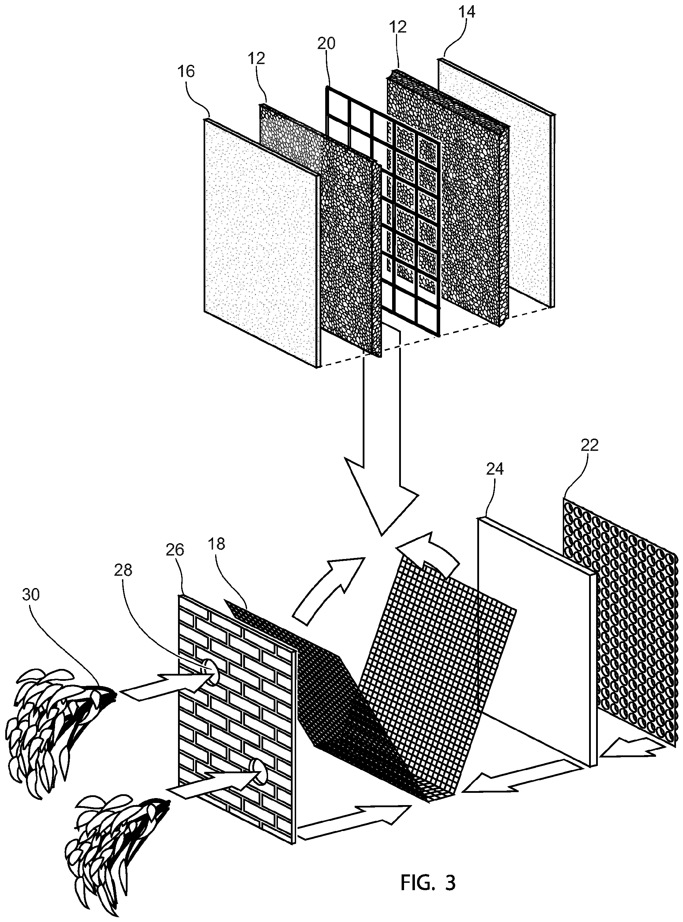

Fig. 3 shows an exploded view in perspective of an agricultural prefabricated wall panel 10. The exploded illustration of figure 3 is similar to the embodiment described in relation to figure 1 and 1A.

In the following is given a list of reference signs that are used in the detailed description of the invention and the drawings referred to in the detailed description of the invention.
- 10, 10', 10", 10'": Agricultural wall panel
- 12: Main layer
- 14: First covering layer
- 16: Second covering layer
- 18: First supporting structure
- 20: Second supporting structure
- 22: Profiled back panel
- 24: Auxiliary layer
- 26: Outer panel
- 28: Opening
- 30: Plant
- 32: Building wall

## Claims

1. An agricultural prefabricated wall panel for mounting as a surface cladding and plant-bearing surface onto a building wall, said wall panel comprising a first main surface for facing said building wall and a second main surface opposite said first main surface for facing an exterior of the building wall and defining an outside cladding surface, said wall panel further comprising an upper surface, a bottom surface and a first and second side surfaces defining vertical side surfaces when mounted onto said building wall,
said wall panel being constructed as a self-supporting laminate wall panel having a main layer and first and second covering layers, said main layer defines a middle layer of the wall panel and said first covering layer covers said main layer on the side facing said building wall and said second covering layer covers said main layer on the side facing said exterior,
said main layer comprises a plant cultivation substrate, such as a soil substrate, suitable for plant cultivation and having a pore space above 45 %, and preferably above 53 %,
said main layer comprising a first cultivation substrate, having a larger grain size than said first and second covering layers, and said main layer further comprising a larger content of "mesopores", having a size of 30 µm-75 µm, compared to said first and second covering layers, and
said wall panel further comprises a first supporting structure enveloping said first and second main surfaces.

2. An agricultural prefabricated wall panel according to claim 1, wherein said main layer comprises a larger content of "mesopores", having a size of 30 µm-75 µm, compared to said first and second covering layers.

3. An agricultural prefabricated wall panel according to claim 1 or 2, wherein said first supporting structure consists of a mesh structure, which is incorporated into said first and second covering layers and at least partly integrated, preferably fully integrated therein.

4. An agricultural prefabricated wall panel according to any of the previous claims, wherein said first covering layer and/or said second covering layer is vapor diffusion open.

5. An agricultural prefabricated wall panel according to any of the previous claims, wherein said wall panel comprises a profiled back panel at said first main surface, said profiled back panel being a vapor barrier and arranged, by said profiles, to establish a ventilated space between said wall panel and said building wall.

6. An agricultural prefabricated wall panel according to any of the previous claims, wherein said main layer comprises an incorporated second supporting structure extending in a direction substantially parallel to said first and second main surfaces.

7. An agricultural prefabricated wall panel according to any of the previous claims, wherein said upper surface, said lower side surface and said first and second side surfaces comprise a profiled surface suitable for mating a corresponding neighboring wall panel.

8. An agricultural prefabricated wall panel according to claim 5, wherein said wall panel comprises an auxiliary layer arranged between said first covering layer and said profiled back panel where said auxiliary layer comprises heat insulating material.

9. An agricultural prefabricated wall panel according to any of the previous claims, wherein said wall panel comprises an outer panel of weatherproof and/or fire retardant material, and arranged onto said first covering layer hereby establishing an outer surface of said wall panel.

10. An agricultural wall panel system comprising a plurality of prefabricated wall panels according to any of claims 1-9, wherein said wall panels are interconnected, hereby establishing a continuous wall panel surface such that said main layers of said wall panels are mutually connected for establishing a continuous plant cultivation substrate.

11. A method for erecting an agricultural wall panel system according to claim 10, said method comprises the steps of:
• providing a plurality of agricultural prefabricated wall panels according to any of claims 1-9,
• mounting said agricultural wall panels onto a supporting surface, such as a building wall or a ground surface, hereby establishing a continuous wall panel surface,
• providing a number of holes through said second main surface and through said second covering layer,
• inserting a number of plants through said openings.
